## Europäisches Patentamt
## European Patent Office
## Office européen des brevets

(11) Veröffentlichungsnummer: **0 440 322 A2**

# EUROPÄISCHE PATENTANMELDUNG

(21) Anmeldenummer: 91250024.6

(51) Int. Cl.5: **C04B 38/06**

(22) Anmeldetag: 30.01.91

(30) Priorität: 02.02.90 DE 4003598

(43) Veröffentlichungstag der Anmeldung:
**07.08.91 Patentblatt 91/32**

(84) Benannte Vertragsstaaten:
**CH DE FR GB IT LI**

(71) Anmelder: **Dr. C. Otto Feuerfest GmbH**
**Dr.-C.-Otto-Strasse 222**
**W-4630 Bochum 5(DE)**

(72) Erfinder: **Hermanski, Werner**
**Franz -Ludwig-Strasse**
**W-8600 Bamberg(DE)**
Erfinder: **Koschlig , Hans-Joachim, Dr.**
**Am Schamberge 10b**
**W-4630 Bochum 5(DE)**
Erfinder: **Kimiai, Holger**
**Leidenfroststrasse 6**
**W-4100 Duisburg 1(DE)**
Erfinder: **Kunkel, Willi**
**Am Sattelgut 12**
**W-4630 Bochum 5(DE)**

(74) Vertreter: **Kaiser, Henning**
**c/o Preussag AG, Patente und Lizenzen,**
**Postfach 15 12 27 Kurfürstendamm 32**
**W-1000 Berlin 15(DE)**

(54) **Verfahren und Vorrichtung zum Herstellen eines keramischen Schaumkörpers.**

(57) Für das Herstellen von keramischen Schaumkörpern mit vom Rechteck abweichenden Querschnitt besteht das Problem der gleichmäßigen Beschichtung des Schaumgerüstes über den gesamten Querschnitt. Es darf nicht zuviel und nicht zu wenig Imprägniermittel in den Schaumstoff gelangen.

Um dies zu erreichen, wird vorgeschlagen, bei der Abquetschung und Verteilung des Imprägniermittels im Schaumstoff (1) die Anordnung der Abquetschspalte treppenartig aufzubauen, jeden Bereich des Querschnitts wenigstens einmal in demselben prozentualen Anteil zusammenzudrücken und eine Vorrichtung dafür zu benutzen, bei dem wenigstens eine Walze (3) dem Profil des herzustellenden mit seinem Querschnitt vom Rechteck abweichenden Schaumkörpers (1) angepaßt ist.

FIG.1

EP 0 440 322 A2

# VERFAHREN UND VORRICHTUNG ZUM HERSTELLEN EINES KERAMISCHEN SCHAUMKÖRPERS

Die Erfindung betrifft ein Verfahren und eine Vorrichtung zum Herstellen eines offenzelligen keramischen Schaumkörpers, insbesondere mit einem nicht rechteckigen Querschnitt für die Herstellung eines keramischen Schaumstoffes mit gleichmäßiger Struktur.

Wie in DE 28 05 611 C2 angegeben, wird ein aus organischem, polymeren Kunststoff bestehender Schaumstoff, wie Polyurethan, mit einer wäßrigen Aufschlämmung getränkt. Die Verteilung der Aufschlämmung in dem Schaumstoff wird durch zweifaches Zusammendrücken auf 50 bis 90 % seiner ursprünglichen Dicke in Spalte zwischen je zwei Walzen erreicht. Der Schaumstoffkörper wird nach dieser Tränkung getrocknet und anschließend unter Zersetzung des organischen Kunststoffes zu einem schaumartigen keramischen Körper gebrannt.

In der erwähnten Schrift werden auch zwei Vorrichtungen gezeigt, bei denen die wäßrige Aufschlämmung entweder über eine Walze und eine Oberfläche oder wenigstens über eine Oberfläche in bzw. vor den ersten Walzenspalt gegossen wird, wobei sich vor der ersten oberen Walze des horizontal oder in geneigter Richtung zugeführten Schaumstoffes ein gewisser Vorrat bildet. Der Schaumstoff hat die Eigenschaft, sich nach Durchgang durch die Walzenspalte auf etwa seine ursprüngliche Form wieder aufzurichten, wobei idealerweise der Schaumkunststoff mit dem keramischen Material durch und durch gleichmäßig beschichtet sein soll. Dazu wird in der Figurenbeschreibung erläutert, daß für die Gewährleistung einer gleichförmigen Verteilung der in dem Schaumkörper zurückgehaltenen Aufschlämmung das Durchführen durch das Walzgerüst mehrmals wiederholt werden kann. Für keramische Schaumstoffkörper, die nach dem genannten Verfahren hergestellt werden, kann das ausreichend sein, da sie zum Filtrieren von Metallen üblicherweise einen rechteckigen Querschnitt mit konstanter Dicke aufweisen. Problematisch ist die gleichmäßige Verteilung, z.B. einer wäßrigen Aufschlämmung im Schaumstoff, zumindest in dem Fall, wenn der Querschnitt des Schaumstoffes von der Rechteckform abweicht. Hier besteht beispielsweise besonders bei bauchigen Querschnitten der Mangel, daß zwar die äußeren Bereiche des Schaumstoffes gut beschichtet werden, aber die mittleren Bereiche unterversorgt sind.

In der GB-PS 1.114 385 ist ein Verfahren angegeben, bei dem z.B. ein poröses, schwammähnliches organisches Material in einem Bad getränkt und die Bahn des zu tränkenden Materials über Rollen durch einen offenen Tankbehälter geführt wird, der Schlicker enthält. Trotz des beschriebenen Abquetschens von Schlicker durch Walzenpaare, ist die Möglichkeit der teilweisen Übertränkung und damit des Zusetzens bestimmter Bereiche des zu tränkenden Körpers sehr wahrscheinlich, weil durch das Bad stellenweise eine zu große Schlickerbeladung stattfindet und beim Abquetschvorgang Füllungen zurückbleiben.

Es ist daher Aufgabe der Erfindung, ein Verfahren und eine Vorrichtung zu schaffen, auch in runden, ovalen, dreieckigen oder sonstigen beliebig geformten Schaumstoffprofilen eine gleichmäßige Verteilung des keramischen Imprägniermittels und damit eine gleichförmige Struktur in dem fertigen Schaumkörper bei einmaligem Durchlauf durch eine Imprägniervorrichtung zu erreichen, auch wenn ein Querschnittsbereich des Schaumstoffes eine größere Dicke von z. B. über 100 mm aufweist.

Diese Aufgabe wird durch ein Verfahren gelöst, bei dem ein offenporiger Kunststoffschaum vor dem Imprägnieren in seiner Form so hergestellt wird, daß seine Querschnittsabmessungen in etwa den Abmessungen der runden, ovalen, dreieckigen oder unregelmäßigen sonstigen Formen der herzustellenden keramischen Schaumkörper entsprechen. Der Kunststoffschaum durchläuft zum Beschichten seines Gerüstes mit keramischem Imprägniermittel mehrere Walzenspalte, wobei die auf den ersten Walzenspalt folgende Walzenspalte so treppenartig gegeneinander versetzt sind, daß die Mittelachse oder Mittelebene des zu beschichtenden Schaumkörpers mehrmals umgelenkt wird und wenigstens in dem letzen von dem benetzten Schaum durchlaufenen Walzenspalt der Schaumstoff in einer Weise zusammengedrückt wird, bei der jeder Bereich des Querschnittes entsprechend der dort vorhandenen Dicke in demselben prozentualen Anteil zusammengedrückt wird.

Für das Verfahren wird eine Vorrichtung benutzt, die aus einem mehrere Walzenspalte enthaltenden Walzgerüst besteht. In diesem Walzgerüst weist wenigstens eine Walze mindestens des letzten Walzenspaltes eine Profilierung auf, die den zu imprägnierenden Schaumstoff trotz seiner unterschiedlichen Querschnittsdicke in gleichem Ausmaß über die gesamte Breite des Querschnitts zusammendrückt. Es können jedoch auch mehrere dem letzten Walzenspalt vorangehende Walzen eine Profilierung aufweisen, die wenigstens teilweise dem Querschnitt angepaßt ist.

Die Unteransprüche geben bevorzugte Weiterbildungen der Erfindung an.

Für die Herstellung keramischer Schaumkörper mit einem über ihre Länge gleichbleibenden aber von einem Rechteck abweichenden Querschnitt löst die Erfindung das Problem der ausreichenden und gleichmäßigen Beschichtung von häufig in der Mitte der Körper auftretenden neutralen Zonen oder Totzonen. Durch die gestufte treppenartige Anordnung der Walzenspalte wird die neutrale Zone immer wieder aus der Beschichtungsachse der Maschine herausgebracht, und die Mittelzone der Schaumkörper mit dem benachbarten, nicht an einer Walze anliegenden Randbereich dehnt sich abwechselnd nach beiden Seiten der Mittelebene aus. Hierdurch erfolgt nach der Beladung der Schaumkörper mit Imprägniermittel, außer der einfachen Beschichtung der Randschichten, auch eine gute Benetzung der im Körperinneren gelegenen Stege des Schaumgerüstes, weil die in Schaumstoffrandbereichen vorhandene Imprägniermasse auch abwechselnd zu den jeweils gegenüberliegenden Rändern des Körpers hin verschoben wird. Das unterscheidet das erfindungsgemäße Verfahren u.a. wesentlich von Abquetschverfahren, bei denen keine Mittenumlenkung stattfindet und der Schaumstoffkörper mit seiner überschüssigen oder mangelhaften Füllung einfach mehrmals zusammengedrückt wird.

Ferner ist ein starkes Zusammendrücken des Schaumstoffes auf z.B. bis zu 90 % seiner ursprünglichen maximalen Dicke nicht unbegrenzt wiederholbar, weil mit zunehmender Wiederholung die Stege des Schaumstoffes abknicken und der Schaumstoff nicht mehr in seine ursprüngliche Lage zurückkehrt. Durch die Anpassung der Walzenprofile an die Querschnittsabmessungen der Schaumkörper wird in einfacher Weise den Erfordernissen einer ausreichenden Dosierung, verbunden mit der gleichmäßigen Verteilung der Imprägniermasse, ohne Überbeanspruchung des Schaumstoffes, Rechnung getragen.

In einer weiteren Ausgestaltung der Erfindung ist vorgesehen, daß der zu imprägnierende Schaumstoff von oben in den Walzenspalt eingeführt wird, an dem der Kontakt mit dem Imprägniermittel erfolgt. Dabei ist die beidseitige Beladung der Schaumstoffbahn vorteilhaft, weil durch die genauere Dosierung die Verteilung des Imprägniermittels verbessert und beschleunigt wird. Diese Maßnahme, in Verbindung mit der Zugabe bereits unmittelbar hinter dem ersten Walzenspalt, läßt das Imprägniermittel auch in dicken Querschnittsbereichen gut in den Schaum eindringen, da die Saugwirkung bei der Entspannung des Schaumes ausgenutzt wird.

Zwar kann der Schaumstoff auch in einzelnen mit Abstand voneinander zugeführten Teilen imprägniert werden, aber hierbei besteht die Gefahr der ungleichmäßigen Imprägniermittelaufgabe. So ist nicht auszuschließen, daß Anfang und Ende eines durchlaufenden Teiles nicht in derselben Weise wie dessen Mitte behandelt werden, was auch Ungleichmäßigkeiten bei verschiedenen Teilen entstehen läßt. Besonders vorteilhaft ist es daher, den Schaumstoff in einem langen Ende oder einer Bahn zuzuführen und diese Bahn vor, während oder nach dem Trocknen in die gewünschten einzelnen Teile aufzuteilen. Sofern einzelne Schaumstoffteile gleichen Querschnitts zu imprägnieren sind, sollten sie ohne Abstand und gegebenenfalls mit leichtem Zuführungsdruck behandelt werden.

Weitere Einzelheiten werden anhand der dargestellten bevorzugten Ausführungsbeispiele beschrieben.

Fig. 1 stellt schematisch ein Walzenpaar mit einer profilierten Walze dar.

Fig. 2 zeigt schematisch die Behandlung eines Schaumstoffes in einem Walzgerüst.

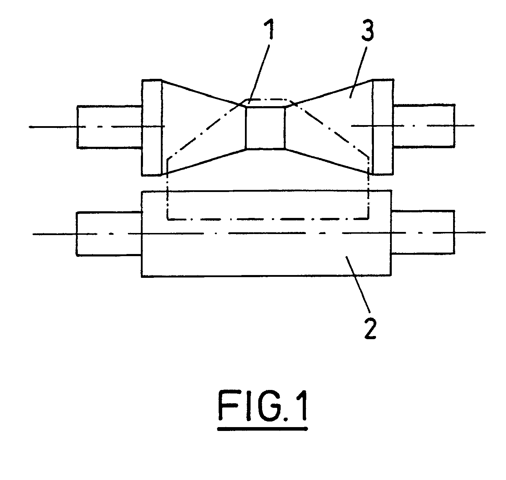

In Fig. 1 ist der Querschnitt eines zu behandelnden Schaumstoffes 1 mit strichpunktierten Linien angedeutet. Vor und hinter den Walzen dehnt sich der Schaumstoff auf die angegebene Form aus. Bei dem dargestellten Beispiel ist eine untere Walze 2 zylindrisch und die obere Walze 3 profiliert. Das Profil der Walze 3 ist so ausgebildet, daß der über seine Breite eine unterschiedliche Dicke aufweisende Schaumstoff 1 über seinen gesamten Querschnitt gleichmäßig zusammengedrückt wird.

Die Profilierung der Walze 3 ist dem jeweiligen Querschnitt anzupassen. Für einen dreieckigen Querschnitt mit abgerundeten Ecken wäre eine Walze einzusetzen, die der dargestellten ähnlich ist. Bei runden, ovalen, polygonalen und unregelmäßigen sonstigen Querschnittsprofilen sind die Walzen entsprechend zu gestalten. Dabei kann es zweckmäßig sein, auch in der zweiten Walze desselben Walzenspaltes eine Profilierung anzuwenden.

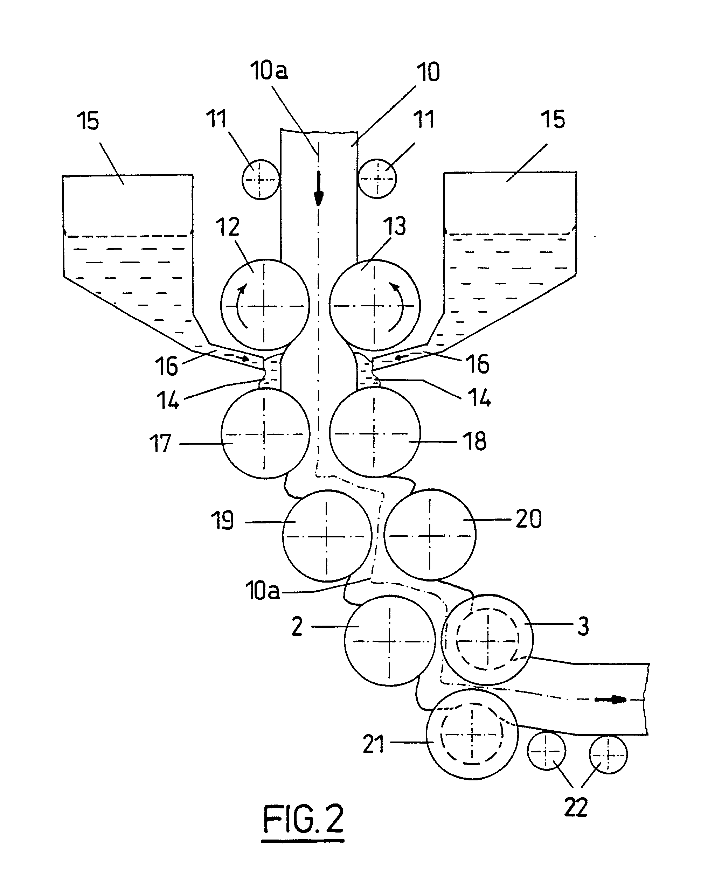

Bei einem Ausführungsbeispiel nach Fig. 2 erfolgt die Zuführung des Schaumstoffes 10 senkrecht von oben entlang Einrichtungen 11 zur Zuführung, die beispielsweise als Führungsrollen oder als ein Zuführungsschacht ausgebildet sein können. Unter der Zuführung bilden Walzen 12, 13 für die Vorkonditionierung, deren Achsen in einer horizontalen Ebene liegen, den ersten Spalt. Darunter folgen die ebenfalls horizontal angeordneten Walzen 17, 18 für die Imprägnierung, die das Imprägniermittel 14 erstmalig in den Schaumstoff 10 hineindrücken. Zwischen beiden Walzenpaaren 12, 13 und 17, 18 erfolgt die Zugabe des Imprägniermittels 14.

Es ist günstig, den Durchmesser der Vorkonditionierungswalzen 12, 13 kleiner zu machen als den der anderen Walzen, um die Entspannung des Schaumstoffes 10 möglichst für die Aufnahme des Imprägniermittels 14, das aus den Behältern 15 über eine geeignete Zuführung oder Rinne 16 kommt, zu nutzen. Die Austrittsöffnungen der Imprägniermittelzuführung 16 sind in ihrer Breite kontinuierlich veränderlich. Mit dem Behälter 15 oder der Zuführung 16 oder auch mit beiden kann ein hier nicht dargestellter Vibrationserzeuger verbunden sein, über dessen Frequenz die Mengenzugabe des Imprägniermittels 14 gesteuert wird.

Die Oberflächen der Imprägnierungswalzen 17, 18 können mit Rillen oder Nuten oder vergleichbaren Oberflächenprofilierungen versehen sein, um das Imprägniermittel 14 leichter in den Schaumstoff 10 hineinzubekommen.

Unterhalb der Imprägnierungswalzen 17, 18, die zylindrisch sein können, folgen wenigstens zwei weitere horizontal angeordnete Walzenpaare 19, 20 und 2, 3 in kurzen vertikalen Abständen untereinander und seitlich gegeneinander versetzt, so daß außer den in vertikaler Richtung zu durchlaufenen Spalten der Walzen 17, 18, 19, 20 und 2, 3 weitere etwa horizontal zu passierende Spalte zwischen den Walzen 18, 19 und 20 und 2 entstehen.

Die Walzen 3 und 21 sind erfindungsgemäß profiliert, wobei der Spalt zwischen 2 und 3 halb profiliert (siehe Fig. 1) und zwischen 3 und 21 voll profiliert ist. Die Anordnung der letzten Profilwalze 21 bewirkt auch eine Umlenkung der Schaumstoffbahn aus der vertikalen in die horizontale oder sonstige gewünschte Richtung. Diese Anordnung wird durch entsprechende Umlenkrollen 22 unterstützt, wobei sich weitere Transporteinrichtungen, unter anderem ein Förderband, anschließen können.

Für den Fall, daß die Behandlung eines Schaumstoffes auch mit weniger als den in Fig. 2 dargestellten Spaltdurchgängen zufriedenstellend ist, kann das Walzgerüst auch durch Wegfall von einer oder mehrerer Walzen, vorzugsweise der Walzen 19 und 20, entsprechend verkürzt werden.

Es ist zweckmäßig, die Walzenspalte einstellbar zu machen. Sowohl der Abstand der horizontalen Walzen zueinander als auch der Walzenpaare untereinander einschließlich der Profilwalzen kann über eine Hydraulik gesteuert werden, die die Abstände mittels eines Mikroprozessors genau reguliert. Maßgebend für diese Steuerung ist eine Profilmessung, die z.B. mittels Fotozellen oder sonstiger geeigneter Vorrichtung vor dem Eintritt in den Vorkonditionierungsspalt zwischen 12 und 13 stattfindet. Selbstverständlich sieht diese Steuerung auch vor, daß jede Walze unabhängig von den anderen horizontal und vertikal bewegt werden kann, so daß jeder Spalt besonders reguliert wird. So können z.B. Walzenspalte in Durchlaufrichtung enger werden, die Horizontalspalte zwischen 18 und 19 sowie 20 und 2 durch Abstandsvergrößerung wegfallen oder die Neigung der Schaumstoffbahn, die mindestens 40° vorzugsweise 45° bis 60° zur Horizontalen sein soll, verändert werden.

Wie in Fig. 2 angedeutet ist, wird die Schaumstoffbahn 10 z. B. zwischen den Walzen 19 und 20 zusammengedrückt, kann sich aber zwischen den Walzen 19 und 2 einseitig stark ausdehnen, während sie an ihrer anderen Seite noch an der Walze 20 anliegt. Hierdurch saugt der sich ausdehenende Randbereich Imprägniermittel aus dem an der Walze anliegende Randbereich durch die strichpunktiert angedeutete Mittelebene 10a der Bahn hindurch, so daß auch im Bereich der Mittelebene 10a selbst bei dicken Querschnitten eine gute Beschichtung der Stege des Schaumstoffgerüsts erfolgt.

## Patentansprüche

1. Verfahren zum Herstellen eines keramischen, offenzelligen Schaumkörpers mit einem nicht rechteckigen Querschnitt, wobei ein aus organischem polymerem Kunststoff bestehender Schaumstoff mit einem keramischen Imprägniermittel beschichtet wird, die Verteilung des Imprägniermittels durch Zusammendrücken des imprägnierten Schaumstoffes in mehreren Spalten zwischen je zwei Walzen erfolgt, der Schaumstoffkörper getrocknet und anschließend unter Zersetzung des organischen Kunststoffes zu einer keramischen Schaumstruktur gebrannt wird, dadurch gekennzeichnet, daß ein offenporiger Kunststoffschaum verwendet wird, dessen Querschnittsabmessungen etwa den Abmessungen der runden, ovalen, dreieckigen oder unregelmäßigen sonstigen Form des herzustellenden keramischen Schaumkörpers entspricht, der Schaumkörper mehrfach in Walzenspalten zusammengedrückt wird, die Mittelebene des zu beschichtenden Schaumkörpers mehrmals treppenartig umgelenkt wird und daß wenigstens in dem letzten von dem benetzten Schaum durchlaufenen Walzenspalt der Schaumstoff in einer Weise zusammengedrückt wird, bei der jeder Bereich des Querschnitts in demselben prozentualen Anteil zusammengedrückt wird.

2. Verfahren nach Anspruch 1, dadurch gekennzeichnet, daß die Zuführung des zu imprägnierenden Schaumstoffs in den ersten und zweiten Walzenspalt in vertikaler Richtung von oben erfolgt und das Imprägniermittel von beiden Seiten mit dem Schaumstoff bereits unmittelbar hinter dem ersten Walzenspalt an einer Stelle in Kontakt gebracht wird, wo sich der Schaumstoff nach dem Spaltdurchgang entspannt.

3. Verfahren nach Anspruch 1 oder 2, dadurch gekennzeichnet, daß der Schaumstoff in einer langen Bahn zugeführt und imprägniert wird und erst danach, jedoch vor dem Brennen, auf die gewünschte Länge einzelner Schaumkörper zerteilt wird.

4. Vorrichtung zur Durchführung des Verfahrens nach Anspruch 1, insbesondere zur Beschichtung eines Schaumstoffes mit einem vom Rechteck abweichenden Querschnitt unter Verwendung eines mehrere Walzenspalte enthaltenden Walzengerüstes, dadurch gekennzeichnet, daß wenigstens eine Walze (3) mindestens des letzten Walzenspaltes eine Profilierung aufweist, die so ausgebildet ist, daß der imprägnierte Schaumstoff (1) trotz unterschiedlicher Querschnittsdicke in einem über die gesamte Breite des Querschnitts gleichen Ausmaß zusammendrückbar ist.

5. Vorrichtung nach Anspruch 4, dadurch gekennzeichnet, daß hinter dem ersten Walzenspalt die Achsen der Walzen von mindestens zwei Walzenspalten (17, 18 und 19, 20) horizontal angeordnet und ihre Spalten gegeneinander treppenartig versetzt sind, wobei die Schaumstoffbahn unter einem Winkel von mindestens 40° zur Horizontalen geneigt ist.

6. Vorrichtung nach Anspruch 4 oder 5, dadurch gekennzeichnet, daß die Mittelebene (10a) des zu beschichtenden Schaumstoffes (10) mehrmals treppenartig umlenkbar und dabei die Imprägniermasse abwechselnd zu den jeweils gegenüberliegenden Rändern der Schaumstoffbahn hin verschiebbar ist.

7. Vorrichtung nach einem der Ansprüche 4 bis 6, insbesondere zur Durchführung des Verfahrens nach Anspruch 2, dadurch gekennzeichnet, daß die Achsen der Walzen (12, 13 und 17, 18) des ersten und zweiten Walzenspaltes jeweils in einer horizontalen Ebene angeordnet sind und Einrichtungen (11) zur Zuführung des Schaumstoffes (10) von oben in den ersten und zweiten Walzenspalt und Mittel zur Zuführung des Imprägniermittels hinter die beiden Walzen (12, 13) des ersten Walzenspaltes vorgesehen sind.

8. Vorrichtung nach Anspruch 7, dadurch gekennzeichnet, daß die Mittel (16) zur Zuführung des Imprägniermittels (14) Vibrationsrinnen sind, bei denen die Aufgabe des Imprägniermittels über die Frequenz gesteuert wird.

## FIG.1

FIG.2